# EUROPEAN PATENT APPLICATION

(11) **EP 4 787 606 A1**
(43) Date of publication of application: **05.08.2026**
(21) Application number: 24872158.1
(22) Date of filing: 24.09.2024
(51) Int. Cl.: H01M 50/533, H01M 10/04, H01M 10/0587, H01M 50/107, H01M 50/152, H01M 50/538, H01M 50/586, H01M 50/593, H01M 10/052

(54) **CYLINDRICAL SECONDARY BATTERY**

(30) Priority: 29.09.2023 JP 2023169461
(71) Applicant: Panasonic Intellectual Property Management Co., Ltd., Kadoma-shi, Osaka 571-0057 (JP)
(72) Inventor: MATSUMOTO, Taiki, Kadoma-shi, Osaka 571-0057 (JP)
(74) Representative: Eisenführ Speiser
(86) International application number: PCT/JP2024/033882
(87) International publication number: WO 2025/070367

(57) **Abstract**

A cylindrical secondary battery (10) includes: an electrode group (14); a cylindrical metal can (16) having an opening at one end, the electrode group being accommodated in the metal can; a current collecting component connected to the electrode group inside the metal can; a sealing body having an electrode terminal exposed to the outside, the sealing body closing off the opening; and a conductive component (60) connected to the current collecting component and the sealing body inside the metal can. The conductive component has a central-side plate part (61) following a plane orthogonal to the central axis, inclined parts (62) extending from a plurality of positions in the circumferential direction of the outer periphery of the central-side plate part toward the outer peripheral side in an oblique direction, and an outer-peripheral-side plate part connected to the outer-peripheral-side end of each inclined part. In each inclined part, a thin part (68), which extends so as to reach both circumferential-direction ends of the inclined part and has a smaller thickness than portions adjacent to both sides, is formed in a part connected to the central-side plate part.

## Description

### TECHNICAL FIELD

The present disclosure generally relates to a cylindrical secondary battery.

### BACKGROUND ART

A cylindrical secondary battery for which a cylindrical metallic can is used has conventionally been known. For example, in a non-aqueous electrolyte secondary battery, an electrode group including a positive electrode plate, a negative electrode plate, and a separator interposed between the positive electrode plate and the negative electrode plate, and a non-aqueous electrolyte are housed in the metallic can. Such a cylindrical non-aqueous electrolyte secondary battery comprises a wound electrode group in which a positive electrode plate and a negative electrode plate are spirally wound with a separator interposed therebetween.

PATENT LITERATURE 1 discloses a cylindrical secondary battery in which a wound-type electrode group is housed in a cylindrical metallic battery can (metallic can), and a lead (conductive component) is welded to an inner surface of a lid (sealing assembly) that closes an opening of the battery can, and an upper surface of an upper current collecting plate (current collecting component). The lead has a plate-shaped top portion, and a side wall expanding obliquely downward from an outer circumference of the top portion. The side wall has slits formed longitudinally from a lower end thereof at circumferential intervals. A lower end portion of the side wall is bent radially outward. This makes it possible to weld the upper current collecting plate and the lead together easily and reliably by appropriate pressurizing force, and to obtain a battery that has low resistance and excellent output characteristics.

### CITATION LIST

### PATENT LITERATURE

PATENT LITERATURE 1: Japanese Unexamined Patent Application Publication No. 2006-331993

### SUMMARY

In a configuration disclosed in PATENT LITERATURE 1, once the conductive component is placed on the current collecting component, and when pressurizing the sealing assembly such that it comes close to the current collecting component to press-bond the conductive component and the sealing assembly together, variations in height in a circumferential direction between the current collecting component and the sealing assembly may not be sufficiently absorbed by the conductive component. Therefore, there is a concern that a large load may be concentrated on the electrode group from a certain portion of the current collecting component in the circumferential direction.

A cylindrical secondary battery according to the present disclosure comprises an electrode group in which a positive electrode plate and a negative electrode plate are wound with a separator interposed between the positive electrode plate and the negative electrode plate, a cylindrical metallic can that has an opening portion at one end and houses the electrode group, a current collecting component that is connected to the electrode group inside the metallic can, a sealing assembly that has an electrode terminal exposed to an outside and closes the opening portion, and a conductive component that is connected to the current collecting component and the sealing assembly inside the metallic can, the conductive component including a near-central plate portion along a plane perpendicular to a center axis, inclination portions extending obliquely to an outer circumferential side from a plurality of circumferential positions on an outer circumference of the near-central plate portion, an outer circumferential-side plate portion connected to an outer circumferential-side end of each of a plurality of inclination portions and connected to the sealing assembly in a one-side surface, wherein in each of a plurality of the inclination portions, a thin portion is formed in a connection portion with the near-central plate portion so as to extend to reach both ends of the inclination portion in a circumferential direction and to be smaller in thickness than portions adjacent to both sides of the thin portion.

According to a cylindrical secondary battery according to the present disclosure, it is possible to reduce application of an excessive load to an electrode group from a certain portion of a current collecting component in a circumferential direction when a conductive component and a sealing assembly are press-bonded to each other.

### BRIEF DESCRIPTION OF DRAWING

FIG. 1 is an axial sectional view of a cylindrical secondary battery of an example of an embodiment.
FIG. 2 is a perspective view of a conductive component as viewed from an obliquely upper side, in an example of an embodiment.
FIG. 3 a sectional view taken along A-A of the conductive component illustrated in FIG. 2.
FIG. 4 a top view of the conductive component illustrated in FIG. 2.
FIG. 5 is a perspective view of a conductive component as viewed from an obliquely upper side, in a cylindrical secondary battery of another example of an embodiment.

### DESCRIPTION OF EMBODIMENTS

Hereinafter, an example of an embodiment of a cylindrical secondary battery according to the present disclosure will be described in detail with reference to the drawings. Note that the cylindrical secondary battery according to the present disclosure is not limited to embodiments described below.

In the following, a non-aqueous electrolyte secondary battery will be exemplified as a cylindrical secondary battery, but the present disclosure is not limited to this, and the cylindrical secondary battery may be an aqueous solution secondary battery.

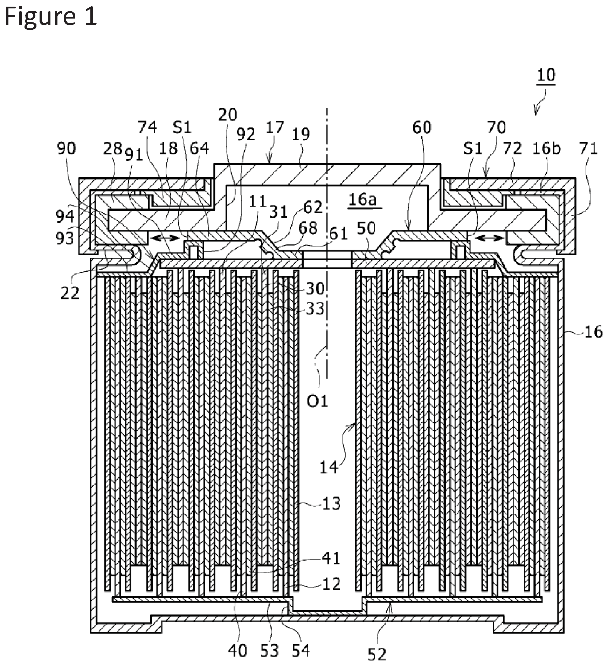

FIG. 1 is a sectional view of a cylindrical secondary battery 10 of an example of an embodiment. As illustrated in FIG. 1, the cylindrical secondary battery 10 is a non-aqueous electrolyte secondary battery, and comprises an electrode group 14 that includes a positive electrode plate 11, a negative electrode plate 12, and a separator 13 and in which the positive electrode plate 11 and the negative electrode plate 12 are wound with the separator 13 interposed between the positive electrode plate 11 and the negative electrode plate 12. The cylindrical secondary battery 10 further comprises a bottomed cylindrical metallic can 16 that houses the electrode group 14, a sealing assembly 17 that closes an opening portion of the metallic can 16, an upper current collecting component 50, and a conductive component 60.

The upper current collecting component 50 is connected to the electrode group 14 as described later. The conductive component 60 connects the upper current collecting component 50 and the sealing assembly 17 as described later. The conductive component 60 can absorb variations in height in a circumferential direction between the upper current collecting component 50 and the sealing assembly 17 when, in a state in which the conductive component 60 is placed on the upper current collecting component 50, the sealing assembly 17 is pressurized, and the conductive component 60 and the sealing assembly 17 are press-bonded to each other. This makes it possible to reduce application of an excessive load to the electrode group 14 from a certain portion of the upper current collecting component 50 in the circumferential direction. This will be described in detail later.

The electrode group 14 and a non-aqueous electrolyte are housed in the metallic can 16. The metallic can 16 has a grooved portion 22 formed in a side wall, and the sealing assembly 17 is supported on the grooved portion 22 and closes an opening portion 16a provided at an upper end which is one end of the metallic can 16. Hereinafter, for convenience of description, the sealing assembly 17 side of the cylindrical secondary battery 10 will be described as "the upper side", and the bottom side of the metallic can 16 will be described as "the lower side". The metallic can 16 is generally made of metals containing iron as a main component and is made of, for example, nickel-plated iron, but may be made of metals containing aluminum or the like as a main component. Note that a thin portion can be locally formed in a bottom of the metallic can to thereby form an easy rupture portion that is easily ruptured by an increase in the internal pressure of the battery. In this case, if the internal pressure of the battery increases, the easy rupture portion ruptures, causing the inside of the easy rupture portion to be deformed to be pushed downward, which makes it possible to discharge high-temperature and high-pressure gas inside the battery through an opening formed inside.

The non-aqueous electrolyte has the ion conductivity (for example, conductivity for lithium ions). The non-aqueous electrolyte includes a non-aqueous solvent, and an electrolyte salt dissolved in the non-aqueous solvent. The non-aqueous electrolyte is not limited to a liquid electrolyte (non-aqueous electrolyte solution), and may be a solid electrolyte that uses a gel polymer or the like. The cylindrical secondary battery 10 is preferably a lithium ion battery. As the electrolyte salt, a lithium salt such as LiBF₄ or LiPF₆ is used. For the non-aqueous solvent, esters such as ethylene carbonate (EC), propylene carbonate (PC), dimethyl carbonate (DMC), ethyl methyl carbonate (EMC), diethyl carbonate (DEC), methyl propionate (MP), ethers, nitriles, amides, and mixed solvents containing two or more selected from the foregoing are used, for example. The non-aqueous solvent may contain a halogen-substituted product, in which at least some of hydrogen atoms in these solvents are substituted with a halogen atom such as fluorine.

Examples of the halogen-substituted product include a fluorinated cyclic carbonate ester such as fluoroethylene carbonate (FEC), a fluorinated chain carbonate ester, and a fluorinated chain carboxylate ester such as methyl fluoropropionate (FMP). The non-aqueous electrolyte contains preferably FEC of greater than or equal to 5% by mass, and more preferably FEC of greater than or equal to 5% by mass and less than or equal to 15% by mass relative to the mass of the non-aqueous electrolyte in terms of reducing a decrease in charging and discharging cycle characteristics of the non-aqueous electrolyte secondary battery or improving the input characteristics of the non-aqueous electrolyte secondary battery.

As the solid electrolyte, a solid or gel polymer electrolyte, an inorganic solid electrolyte, and the like are used, for example. The polymer electrolyte includes a lithium salt and a matrix polymer, or includes the non-aqueous solvent, the lithium salt, and a matrix polymer, for example. As the matrix polymer, a polymer material that absorbs the non-aqueous solvent to gel is used, for example. Examples of the polymer material for use include a fluororesin, an acrylic resin, and a polyether resin. As the inorganic solid electrolyte, a known material for an all-solid-state lithium ion secondary battery or the like (for example, an oxide-type solid electrolyte, a sulfide-type solid electrolyte, halogen-type solid electrolyte, and the like) is used, for example.

The electrode group 14 has a wound structure in which the positive electrode plate 11 and the negative electrode plate 12 are spirally wound with the separator 13 interposed therebetween, as described above. The positive electrode plate 11, the negative electrode plate 12, and the separator 13 are all a band-shaped elongated body and are spirally wound to be alternately stacked in a radial direction of the electrode group 14. To prevent precipitation of lithium, the negative electrode plate 12 is formed to be one size larger than the positive electrode plate 11. That is, the negative electrode plate 12 is formed to be longer than the positive electrode plate 11 in a longitudinal direction and a short direction. The separator 13 is formed to be one size larger than at least the positive electrode plate 11, and two separators are disposed so as to sandwich the positive electrode plate 11, for example.

In the electrode group 14, a longitudinal portion of a positive electrode core 30 forming the positive electrode plate 11 forms an upper lead-out portion 31 that is longer upward than the other portion of the positive electrode core 30 in the longitudinal direction. An upper end of the upper lead-out portion 31 is welded to a lower surface of the upper current collecting component 50 disposed in the upper side of the electrode group 14 inside the metallic can 16. The upper current collecting component 50 is made of a metal formed in a disk shape, and has a center hole formed at a center portion. Thus, the upper current collecting component 50 is electrically connected to the positive electrode core 30. The upper current collecting component 50 is electrically connected to the sealing assembly 17 to be described later via the conductive component 60 to be described later.

In the electrode group 14, a negative electrode core 40 forming the negative electrode plate 12 is led out downward from the other portions located at a lower end of the electrode group 14. A lower end of the negative electrode core 40 is welded to an upper surface of a lower current collecting component 52 disposed in the lower side of the electrode group 14. The lower current collecting component 52 has a bottomed lower cylindrical portion 54 bulged downward at a center portion of a disk portion 53, and a lower surface of the lower cylindrical portion 54 is welded to the bottom of the metallic can 16. Thus, the negative electrode core 40 is electrically connected to the metallic can 16, and the metallic can 16 serves as a negative electrode terminal.

The positive electrode plate 11 has the positive electrode core 30, and a positive electrode mixture layer 33 formed on each surface of the core. For the positive electrode core 30, a foil of metal such as aluminum or an aluminum alloy, which is stable within a potential range of the positive electrode plate 11, and a film in which such a metal is disposed on a surface layer thereof can be used. The positive electrode mixture layer 33 includes a positive electrode active material, a conductive agent such as acetylene black, and a binder such as polyvinylidene fluoride (PVdF), and is preferably formed on each surface of the positive electrode core 30. The thickness of the positive electrode mixture layer 33 is greater than or equal to 40 µm and less than or equal to 100 µm, for example. For the positive electrode active material, a lithium-transition metal composite oxide containing Ni, Co, Mn, Al, and the like is used, for example.

The negative electrode plate 12 has a negative electrode core 40, and a negative electrode mixture layer 41 formed on each surface of the negative electrode core 40. For the negative electrode core 40, a foil of metal such as copper or a copper alloy, which is stable within a potential range of the negative electrode plate 12, and a film in which such a metal is disposed on a surface layer thereof can be used. The negative electrode mixture layer 41 includes a negative electrode active material, and a binder such as a styrene-butadiene rubber (SBR). The thickness of the negative electrode mixture layer 41 is greater than or equal to 40 µm and less than or equal to 100 µm, for example. For the negative electrode active material, graphite, an Si-containing material, or the like is used, for example.

A gasket 28 is provided between the metallic can 16 and the sealing assembly 17, so that the inside of the battery is sealed. The metallic can 16 has the grooved portion 22 that supports the sealing assembly 17, which is formed by pressing, for example, a side surface portion from the outside. The grooved portion 22 is preferably formed in an annular shape along the circumferential direction of the metallic can 16, and supports the sealing assembly 17 on its upper surface. Moreover, an upper end portion of the metallic can 16 is bent inward and crimped to a peripheral edge portion of the sealing assembly 17. Therefore, the sealing assembly 17 closes the opening portion 16a of the metallic can 16.

The sealing assembly 17 is made of a metal, and is formed in a hat shape that has, at a center portion of a disk portion 18, a cylindrical portion 20 in which an upper end bulging upward is closed by an electrode terminal 19. The upper current collecting component 50 is electrically connected to a lower surface of the disk portion 18 via the conductive component 60 to be described later. Thus, the electrode terminal 19 of the sealing assembly 17 serves as a positive electrode terminal exposed to the outside. Note that an annular or C-shaped thin portion can be formed in a lower surface or an upper surface of the electrode terminal 19 to thereby form an easy rupture portion that is easily ruptured by an increase in the internal pressure of the battery. In this case, if the internal pressure of the battery increases, the easy rupture portion ruptures, causing the inside of the easy rupture portion to be deformed to be pushed upward, which makes it possible to discharge high-temperature and high-pressure gas inside the battery through an opening formed inside.

In the upper end portion of the metallic can 16, a negative electrode-side external terminal 70 is fitted and connected to an outer surface of a bent portion 16b over the entire circumference, the bent portion 16b being bent toward the inside of the upper end from an outer circumferential-side end portion of the upper surface of an inner portion of the grooved portion 22. The negative electrode-side external terminal 70 is made of a metal, and is formed to have a substantially L-shaped cross section that has a cylindrical portion 71 and a flange-shaped disk portion 72 provided at an upper end of the cylindrical portion 71. A lower end of the cylindrical portion 71 is hooked by an inwardly projecting hook portion to the outer circumferential-side end portion of the upper surface of the inner portion of the grooved portion. A lower surface of the disk portion 72 may contact and be welded to the upper surface, which is the outer surface of the bent portion 16b of the metallic can 16, over the entire circumference. An outer insulating component 74 is disposed between the upper surface of the disk portion 18 and the outer circumferential surface of the cylindrical portion 20 in the sealing assembly 17, and the negative electrode-side external terminal 70, and insulates the sealing assembly 17 from the negative electrode-side external terminal 70. Thus, in an upper portion of the cylindrical secondary battery 10, the negative electrode-side external terminal 70 is disposed around the cylindrical portion 20 of the sealing assembly 17. An external negative electrode lead (not illustrated) is welded to the negative electrode-side external terminal 70. An external positive electrode lead (not illustrated) is welded to an upper end of the sealing assembly 17. This makes it possible to connect electrical components for power extraction to both of the positive electrode and the negative electrode from an upper side of the cylindrical secondary battery 10.

Inside the metallic can 16, an insulating component 90 formed of an insulating material such as resin is disposed between an upper end of the electrode group 14 and the upper current collecting component 50, and the metallic can 16. The insulating component 90 has a function of insulating the upper end of the electrode group 14 and the upper current collecting component 50 from the metallic can 16 and a function as a backup member for reducing downward deformation of the conductive component 60 to be described later.

In the insulating component 90, an inner circumferential-side disk portion 91 and an outer circumferential-side disk portion 93 are connected via an inclined cylindrical portion 94. The inner circumferential-side disk portion 91 is disposed above the outer circumferential-side disk portion 93. The outer circumferential-side disk portion 93 is placed on the upper end of the electrode group 14, and is disposed between the electrode group 14 and a lower end of the grooved portion 22 of the metallic can 16. The inner circumferential-side disk portion 91 is placed on an upper end of an outer circumferential portion of the upper current collecting component 50, and it inner circumferential-side end portion faces a lower side which is the electrode group side of an outermost circumferential portion of the conductive component 60 to be described later. At the inner circumferential-side end portion of the inner circumferential-side disk portion 91, an annular projection 92 is formed in which a mountain shape projecting upward and having a rectangular cross section is continuous over the entire circumference. An upper end of the annular projection 92 contacts a lower surface of the outermost circumferential portion of the conductive component 60. The function of the insulating component 90 as the backup member will be described in detail later.

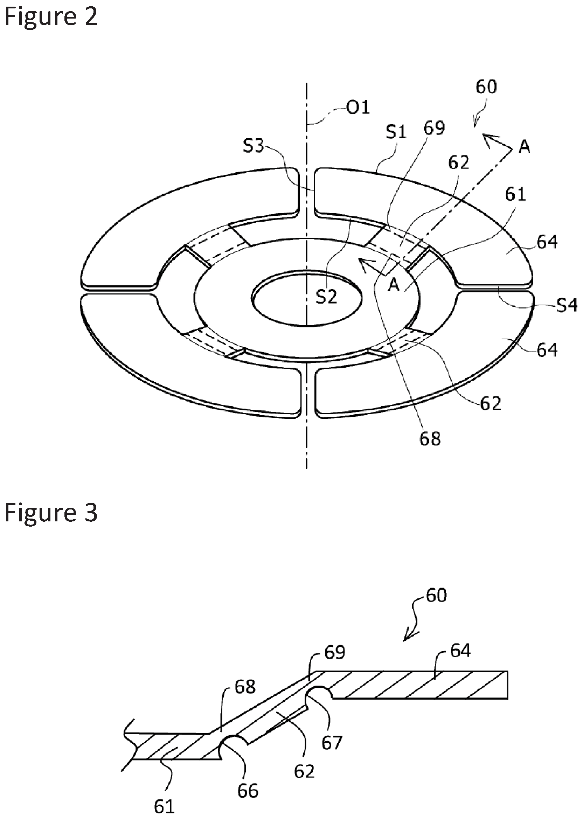

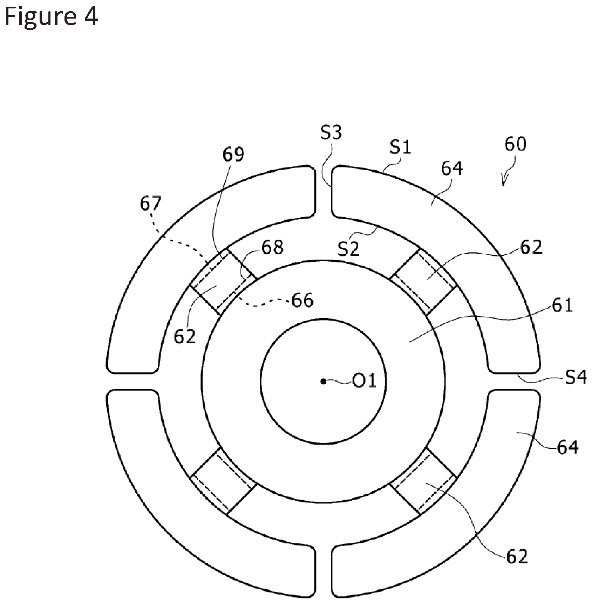

Hereinafter, a configuration of the conductive component 60 will be described in detail with reference to FIGS. 1, 2, and 3. FIG. 2 is a perspective view of the conductive component 60 taken out from the cylindrical secondary battery 10, as viewed from an obliquely upper side. FIG. 3 is a sectional view taken along A-A of the conductive component 60. FIG. 4 is a top view of the conductive component 60.

The conductive component 60 is electrically connected to the upper current collecting component 50 and the sealing assembly 17 as described above. Therefore, a lower end surface of the conductive component 60 is connected to an upper surface of the upper current collecting component 50 by means of welding. An upper end surface of the conductive component 60 is welded to the lower surface of the disk portion 18 of the sealing assembly 17 after being press-bonded to the lower surface of the disk portion 18.

The conductive component 60 is made of a metal plate, and has an annular near-central plate portion 61 provided at a radially inner end portion, and a plurality of inclination portions 62 extending radially from a plurality of circumferential positions on an outer circumference of the near-central plate portion 61 and extending obliquely to an outer circumferential side toward an upper side corresponding to an upper end side of the cylindrical secondary battery 10. In FIG. 2, four inclination portions 62 are provided in the conductive component 60, but the number of inclination portions 62 to be provided is not limited thereto, and may be a plural number such as two, three, or greater than or equal to five. The conductive component 60 is formed by pressing the metal plate such as nickel or nickel-plated steel plate. The conductive component 60 can be made of a metal such as copper or aluminum that has the conductivity.

The inclination portions 62 are connected via only the planar near-central plate portion 61. Circumferential side surfaces of the inclination portions 62 are not connected each other in an inclined plate portion inclined with respect to a center axis O1 along an up-down direction. This enables each inclination portion 62 to move without being affected by movement of the other inclination portions when the above-described press-bonding is performed. This makes it easy to absorb variations in height in the circumferential direction between the lower surface of the disk portion 18 of the sealing assembly 17 and the upper surface of the upper current collecting component 50.

The conductive component 60 further has an outer circumferential-side plate portion 64 that is provided in an outer circumferential portion, and is connected to the outer circumferential-side end of each inclination portion 62. The outer circumferential-side plate portion 64 has an arc shape, and a plurality of outer circumferential-side plate portions 64 are provided to be located on the same circle and are spaced apart from each other in the circumferential direction. The outer circumferential-side plate portion 64 has a circumferential width larger than that of the inclination portion 62. An upper surface which is a one-side surface of the outer circumferential-side plate portion 64 is connected to the lower surface of the disk portion 18 of the sealing assembly 17. The width of the outer circumferential-side plate portion 64 in the circumferential direction is larger than the width of the inclination portion 62 in the circumferential direction, which makes it easier for the conductive component 60 to contact the disk portion 18 in a large area portion of the outer circumferential-side plate portions 64 even when distances in the height direction between the lower surface of the disk portion 18 of the sealing assembly 17 and the upper surface of the upper current collecting component 50 varies in the circumferential direction.

The near-central plate portion 61 has a plate shape along a plane perpendicular to the center axis O1 along the up-down direction of the conductive component 60. Furthermore, as illustrated in FIG. 3, in each inclination portion 62 of the conductive component 60, grooves 66 and 67 are formed in both respective ends of the lower surface in the radial direction. The grooves 66 and 67 have a substantially semicircular cross section, but is not limited thereto, and may have a V-shaped or rectangular valley shape, or the like. The grooves are not limited thereto, and may be on the upper surface or separately on the upper and lower surfaces.

The lower groove 66 is formed on the lower surface of the connection portion with the near-central plate portion 61 in the inclination portion 62, and extends to reach both ends of the inclination portion 62 in the circumferential direction. This groove 66 causes a thin portion 68 to extend to reach both ends of the inclination portion 62 in the circumferential direction, and the thin portion 68 has a thickness smaller than portions adjacent to both sides of the thin portion 68. The thin portion 68 corresponds to a first thin portion. This makes it easy for the inclination portion 62 to be bent toward both sides in the up-down direction with respect to the near-central plate portion 61, which makes it easy for the outer circumferential-side plate portion 64 to move in the up-down direction. Therefore, variations in height in the circumferential direction between the sealing assembly 17 and the upper current collecting component 50 can be easily absorbed by each outer circumferential-side plate portion 64 of the conductive component 60.

The upper groove 67 is formed on the lower surface of the connection portion with the outer circumferential-side plate portion 64 in the inclination portion 62, and extends to reach both ends of the inclination portion 62 in the circumferential direction. This groove 67 causes a thin portion 69 to extend to reach both ends of the inclination portion 62 in the circumferential direction, and the thin portion 69 has a thickness smaller than portions adjacent to both sides of the thin portion 69. The thin portion 69 corresponds to a second thin portion. This makes it easy for the outer circumferential-side plate portion 64 to be bent toward both sides in the up-down direction around the upper end portion of the inclination portion 62. Therefore, when the upper end of the annular projection 92 of the insulating component 90 is brought into contact with the lower surfaces of the outer circumferential-side plate portions 64, the upper surfaces of the outer circumferential-side plate portions 64 are easily brought in surface contact with the lower surface of the disk portion 18 of the sealing assembly 17 by a synergistic effect with reduction in downward deformation of the conductive component 60. This makes it possible to efficiently prevent poor welding from being caused by corner contacts between upper end corner portions of the outer circumferential-side plate portions 64 and the lower surface of the disk portion 18. Note that when the insulating component 90 is not brought into contact with the lower surfaces of the outer circumferential-side plate portion 64, a configuration may be adopted in which the upper groove 67 and the upper thin portion 69 are not formed.

Both side surfaces S1 and S2 in the radial direction and both side surfaces S3 and S4 in the circumferential direction of the four outer circumferential-side plate portions 64 do not contact the other members. The four outer circumferential-side plate portions 64 are independent of and separate from one another. Thus, as described later, when the sealing assembly 17 crimp-fixed to the upper end portion of the metallic can 16 is press-bonded to the conductive component 60 by being pressurized from the upper side after the lower surface of the near-central plate portion 61 of the conductive component 60 is welded to the upper surface of the upper current collecting component 50, the movement of the outer circumferential-side plate portions 64 in the radial direction and the circumferential direction is allowed. Therefore, each outer circumferential-side plate portion 64 moves in the radial direction and the like as indicated by arrows in FIG. 1 while the inclination portions 62 are bent, which makes it easier for variations in height in the circumferential direction between the upper current collecting component 50 and the sealing assembly 17 to be absorbed by the conductive component 60.

As illustrated in FIG. 4, a valley line of the groove 66 forming the thin portion 68 of the conductive component 60 is linear when the conductive component 60 is viewed from one side in the up-down direction which is one side in the center axis O1. Therefore, unlike the case where each valley line is arcuate along the shape of the connection portion of the inclination portion 62 and the near-central plate portion 61, the inclination portion 62 is bent more easily with respect to the near-central plate portion 61.

In addition, a valley line of the groove 67 forming the thin portion 69 of the conductive component 60 is linear when the conductive component 60 is viewed from one side in the up-down direction. Therefore, unlike the case where each valley line is arcuate along the shape of the connection portion of the inclination portion 62 and the outer circumferential-side plate portion 64, the outer circumferential-side plate portion 64 is bent more easily with respect to the inclination portion 62. Note that a configuration may be adopted in which the grooves 66 and 67 are formed so that the valley lines are arcuate.

When the above-described cylindrical secondary battery is manufactured, the electrode group 14 and the upper current collecting component 50 on the upper side of the electrode group 14 are housed in the metallic can 16 after the lower current collecting component 52 is welded to the upper surface of the bottom of the metallic can 16.

Next, after the insulating component 90 and the near-central plate portion 61 of conductive component 60 are placed on the upper surface of the upper current collecting component 50 in this order, a non-aqueous electrolyte is injected from the upper end opening before the upper end portion of the metallic can 16 is bent and crimped. At this time, the near-central plate portion 61 of the conductive component 60 may be welded to the upper surface of the upper current collecting component 50 in advance. Then, the sealing assembly 17 is crimp-fixed to the upper end portion of the metallic can 16. In this state, the upper end of the annular projection 92 of the insulating component 90 and the lower surfaces of the outer circumferential-side plate portions 64 of the conductive component 60 are separated in the up-down direction. In addition, the upper surfaces of the outer circumferential-side plate portions 64 and the lower surface of the disk portion 18 of the sealing assembly 17 are separated in the up-down direction. In this state, the grooved portion 22 further expands in the up-down direction than the state illustrated in FIG. 1.

Then, the disk portion 18 of the sealing assembly 17 is press-bonded to each outer circumferential-side plate portion 64 of the conductive component 60 while the grooved portion 22 is deformed by pressuring the sealing assembly 17 and the upper end portion of the metallic can 16 from the upper side. At this time, the conductive component 60 is easily bent by the lower thin portion 68 of each inclination portion 62, and the other members do not contact both side surfaces in the circumferential direction and both side surfaces in the radial direction of each outer circumferential-side plate portion 64, so that the movement of each outer circumferential-side plate portion 64 in the circumferential direction and the radial direction is allowed. Therefore, each outer circumferential-side plate portion 64 easily moves in the up-down direction without being restricted to the movement of the other outer circumferential-side plate portions 64. This makes it easy to absorb variations in height in the circumferential direction between the upper current collecting component 50 and the sealing assembly 17 by the conductive component 60. Accordingly, it is possible to reduce application of an excessive load to the electrode group 14 from a certain portion of the upper current collecting component 50 in the circumferential direction when the conductive component 60 and the sealing assembly 17 are press-bonded to each other.

After the press-bonding of the conductive component 60 and the sealing assembly 17 is thus completed, the current for welding is applied between both terminals of the positive electrode and the negative electrode of the cylindrical secondary battery 10, so that the conductive component 60 and the sealing assembly 17 are welded together, the negative electrode core 40 of the electrode group 14 and the lower current collecting component 52 are welded together, and the upper lead-out portion 31 of the electrode group 14 and the upper current collecting component 50 are welded together. At this time, the upper current collecting component 50 and the near-central plate portion 61 of the conductive component 60 may be welded together.

At this time, a radial gap is formed between the radial outer surface S1 of each outer circumferential-side plate portion 64 of the conductive component 60 and the gasket 28, and a gap is formed in the circumferential outer side of both side surfaces of each outer circumferential-side plate portion 64 in the circumferential direction. This makes it easy for steam generated by heat during welding to escape to these gaps. Therefore, it is possible to efficiently prevent pores from being formed in the sealing assembly 17 due to steam.

Note that in a state after the cylindrical secondary battery 10 is completed, the radial outer side surface S1 of each outer circumferential-side plate portion 64 of the conductive component 60 may contact the gasket 28 without a gap formed between the radial outer side surface S1 of each outer circumferential-side plate portion 64 of the conductive component 60 and the gasket 28. Even in this case, a gap is formed in the circumferential outer side of both side surfaces of each outer circumferential-side plate portion 64 in the circumferential direction, which makes it easy for the above-described steam to escape to the gap. Even in this case, the effect is lower than that in the configuration in FIG. 1, but it is possible to efficiently prevent pores from being formed in the sealing assembly 17 due to steam.

After the above-described welding in the cylindrical secondary battery 10, the outer insulating component 74 and the negative electrode-side external terminal 70 are fixed to the upper portion of the metallic can 16.

Although a case has been described above where each outer circumferential-side plate portion 64 is arcuate, and the width of the outer circumferential-side plate portion 64 in the circumferential direction is larger than the width of the inclination portion 62 in the circumferential direction, the width of the outer circumferential-side plate portion 64 in the circumferential direction may be the same as the width of the inclination portion 62 in the circumferential direction and the outer circumferential-side plate portion 64 may have a plate shape extending in the radial direction as long as the outer circumferential-side plate portion 64 is connected to the outer circumferential end of the corresponding inclination portion 62, and the upper surface of each outer circumferential-side plate portion 64 is connected to the lower surface of the sealing assembly 17.

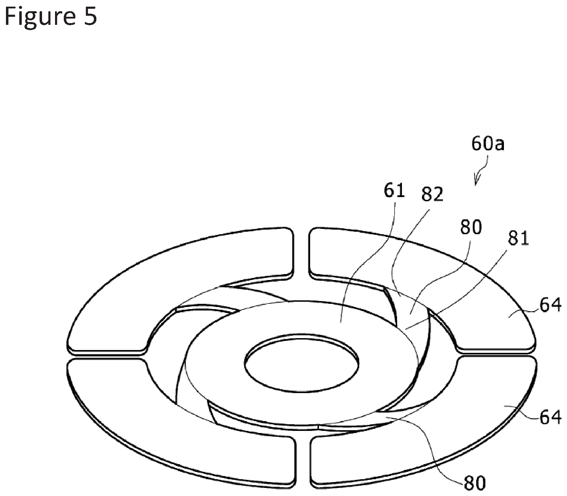

FIG. 5 is a perspective view of a conductive component 60a as viewed from an obliquely upper side, in a cylindrical secondary battery of another example of an embodiment. In the conductive component 60a of this example, a plurality of inclination portions 80 connecting a near-central plate portion 61 and outer circumferential-side plate portions 64 extend obliquely to an outer circumferential side toward an upper side while being inclined in a curved shape toward one side in the circumferential direction from a plurality of circumferential positions on an outer circumference of the near-central plate portion 61. Grooves are formed in both upper and lower end portions on the lower surface of each inclination portion 80, so that thin portions 81 and 82 are formed in both upper and lower end portions of each inclination portion.

According to a configuration of this example, the length of each inclination portion 80 can be longer than that in the configuration illustrated in FIGS. 1 to 4 without increasing an outer diameter of the conductive component 60a. This makes it easier to deform each inclination portion 80 with a small force, which makes it easier for variations in height in the circumferential direction between an upper current collecting component 50 and a sealing assembly 17 to be absorbed by the conductive component 60a. In this example, other configuration and operation are similar to the configuration illustrated in FIGS. 1 to 4. Note that in the configuration in this example, each inclination portion may extend obliquely to an outer circumferential side toward an upper side while being inclined "linearly" toward one side in the circumferential direction from a plurality of circumferential positions on an outer circumference of the near-central plate portion 61.

In the configuration of each example described above, a case has been described where the grooves provided in both upper and lower end portions of each inclination portion 62, 80 are provided on the lower surface of each inclination portion 62, 80, but each groove may be provided on the upper surface of each inclination portion. On the other hand, from the viewpoint of easily and greatly bending the inclination portion 62, 80 and the outer circumferential-side plate portion 64 upward with respect to the near-central plate portion 61 and the inclination portions 62, 80 with a small force, it is preferable to provide the grooves on the lower surface of the inclination portion 62, 80 as in configurations of examples described above. The grooves may be formed on both upper and lower surfaces of each inclination portion 62, 80, so that the thin portions are formed.

In the above-described embodiments, a case has been described where the sealing assembly 17 is formed of a single member, but the sealing member may be formed by coupling a plurality of components. In the above-described embodiments, a case has been described where the insulating component 90 functions as the backup member, but a resin member different from the insulating component may be disposed, as the backup member, between the upper current collecting component 50 and the outer circumferential-side plate portions 64 of the conductive component 60, 60a.

The present disclosure is further described by the following embodiments.
Configuration 1: A cylindrical secondary battery, comprising:
   an electrode group in which a positive electrode plate and a negative electrode plate are wound with a separator interposed between the positive electrode plate and the negative electrode plate;
   a cylindrical metallic can that has an opening portion at one end and houses the electrode group;
   a current collecting component that is connected to the electrode group inside the metallic can;
   a sealing assembly that has an electrode terminal exposed to an outside and closes the opening portion; and
   a conductive component that is connected to the current collecting component and the sealing assembly inside the metallic can,
   the conductive component including
   a near-central plate portion along a plane perpendicular to a center axis, inclination portions extending obliquely to an outer circumferential side from a plurality of circumferential positions on an outer circumference of the near-central plate portion, an outer circumferential-side plate portion connected to an outer circumferential-side end of each of a plurality of the inclination portions and connected to the sealing assembly in a one-side surface, wherein in each of a plurality of the inclination portions, a first thin portion is formed in a connection portion with the near-central plate portion so as to extend to reach both ends of the inclination portion in a circumferential direction and to be smaller in thickness than portions adjacent to both sides of the first thin portion.
Configuration 2: The cylindrical secondary battery according to configuration 1, in which
   the outer circumferential-side plate portion has a circumferential width larger than a circumferential width of the inclination portion.
Configuration 3: The cylindrical secondary battery according to claim 2, in which
   radial side surfaces and circumferential side surfaces of the outer circumferential-side plate portion do not contact the other members.
Configuration 4: The cylindrical secondary battery according to any one of configurations 1 to 3, in which
   a valley line forming the first thin portion of the conductive component is linear when the conductive component is viewed from one side in a direction of the center axis.
Configuration 5: The cylindrical secondary battery according to any one of configurations 1 to 4, further comprising:
   a resin backup member that is placed on the sealing assembly side of the current collecting component to face the electrode group side of an outermost circumferential portion of the conductive component.
Configuration 6: The cylindrical secondary battery according to configuration 5, in which
   in each of a plurality of the inclination portions, a second thin portion is formed in a connection portion with the outer circumferential-side plate portion so as to extend to reach both ends of the inclination portion in a circumferential direction and to be smaller in thickness than portions adjacent to both sides of the second thin portion.

### REFERENCE SIGNS LIST

10 Cylindrical secondary battery, 11 Positive electrode plate, 12 Negative electrode plate, 13 Separator, 14 Electrode group, 16 Metallic can, 16a Opening portion, 16b Bent portion, 17 Sealing assembly, 18 Disk portion, 19 Top plate portion, 20 Cylindrical portion, 22 Grooved portion, 28 Gasket, 30 Positive electrode core, 31 Upper lead-out portion, 33 Positive electrode mixture layer, 40 Negative electrode core, 41 Negative electrode mixture layer, 50 Upper current collecting component, 52 Lower current collecting component, 53 Disk portion, 54 Lower cylindrical portion, 60, 60a Conductive component, 61 Near-central plate portion, 62 Inclination portion, 64 Outer circumferential-side plate portion, 66, 67 Groove portion, 68, 69 Thin portion, 70 Negative electrode-side external terminal, 71 Cylindrical portion, 72 Disk portion, 74 Outer insulating component, 80 Inclination portion, 81, 82 Thin portion, 90 Insulating component, 92 Annular projection

## Claims

1. A cylindrical secondary battery, comprising:
an electrode group in which a positive electrode plate and a negative electrode plate are wound with a separator interposed between the positive electrode plate and the negative electrode plate;
a cylindrical metallic can that has an opening portion at one end and houses the electrode group;
a current collecting component that is connected to the electrode group inside the metallic can;
a sealing assembly that has an electrode terminal exposed to an outside and closes the opening portion; and
a conductive component that is connected to the current collecting component and the sealing assembly inside the metallic can,
the conductive component including
a near-central plate portion along a plane perpendicular to a center axis, inclination portions extending obliquely to an outer circumferential side from a plurality of circumferential positions on an outer circumference of the near-central plate portion, an outer circumferential-side plate portion connected to an outer circumferential-side end of each of a plurality of the inclination portions and connected to the sealing assembly in a one-side surface, wherein in each of a plurality of the inclination portions, a first thin portion is formed in a connection portion with the near-central plate portion so as to extend to reach both ends of the inclination portion in a circumferential direction and to be smaller in thickness than portions adjacent to both sides of the first thin portion.

2. The cylindrical secondary battery according to claim 1, wherein
the outer circumferential-side plate portion has a circumferential width larger than a circumferential width of the inclination portion.

3. The cylindrical secondary battery according to claim 2, wherein
radial side surfaces and circumferential side surfaces of the outer circumferential-side plate portion do not contact the other members.

4. The cylindrical secondary battery according to claim 1, wherein
a valley line forming the first thin portion of the conductive component is linear when the conductive component is viewed from one side in a direction of the center axis.

5. The cylindrical secondary battery according to claim 1, further comprising:
a resin backup member that is placed on the sealing assembly side of the current collecting component to face the electrode group side of an outermost circumferential portion of the conductive component.

6. The cylindrical secondary battery according to claim 5, wherein
in each of a plurality of the inclination portions, a second thin portion is formed in a connection portion with the outer circumferential-side plate portion so as to extend to reach both ends of the inclination portion in a circumferential direction and to be smaller in thickness than portions adjacent to both sides of the second thin portion.
